(19) Europäisches Patentamt / European Patent Office / Office européen des brevets

(11) **EP 2 626 396 A1**

(12) **EUROPEAN PATENT APPLICATION**
published in accordance with Art. 153(4) EPC

(43) Date of publication:
**14.08.2013 Bulletin 2013/33**

(21) Application number: **11830363.5**

(22) Date of filing: **30.09.2011**

(51) Int Cl.:
***C09J 7/02*** (2006.01)     ***B60B 7/00*** (2006.01)

(86) International application number:
**PCT/JP2011/005554**

(87) International publication number:
**WO 2012/046429 (12.04.2012 Gazette 2012/15)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.10.2010 JP 2010228142**

(71) Applicant: **Nitto Denko Corporation Ibaraki-shi Osaka 567-8680 (JP)**
(72) Inventors:
• **HANAKI, Ikkou**
  **Ibaraki-shi**
  **Osaka 567-8680 (JP)**
• **KAI, Makoto**
  **Ibaraki-shi**
  **Osaka 567-8680 (JP)**
• **KATO, Naoto**
  **Ibaraki-shi**
  **Osaka 567-8680 (JP)**
• **TAMAI, Hironori**
  **Ibaraki-shi**
  **Osaka 567-8680 (JP)**

(74) Representative: **Grünecker, Kinkeldey, Stockmair & Schwanhäusser Leopoldstrasse 4 80802 München (DE)**

(54) **PROTECTION FILM FOR WHEEL**

(57)     A protection film (10) comprises a base material layer (12), and an adhesive layer (14) disposed on one face of the base material layer (12). Airflow sections (18) are formed in the protection film (10) so that air can flow from the one face to the other face of the protection film (10). The trouser tear strength of the protection film for a wheel is 3 N or greater in the machine direction (MD). The adhesive strength (adherend: a panel with an acrylic clear coating ,measured after 48 hours under conditions of 23°C and 50% RH) of the protection film for a wheel is 4.9 N/25 mm or greater at a tension rate of 0.3 m/min and 19.6 N/25 mm or less at a tension rate of 30 m/min.

# FIG.2

**Description**

TECHNICAL FIELD

The present invention relates to a wheel protective film.

BACKGROUND ART

Until now, there are problems in automotive wheels, such as aluminum wheels, that water enters the inside of the automotive wheels from the outside during transportation of automobiles, for example, during transportation by ship, due to a change in humidity in the ship, etc., thereby causing rust in disc brakes provided on the inner side of the wheels, etc. In order to prevent occurrence of this rust, protective films are attached to the surfaces of the wheels.
It is needed that protective films used for automotive wheels keep states of being attached thereto before automobiles are delivered, and it is required that the protective films can be easily released when it is to be done so and adhesive deposits are not caused on the surfaces of the wheels when released.
Patent Document 1 discloses a technique in which peeling of a protective film attached to the external surface of an automotive wheel, occurring due to a pressure difference between the inside and outside of the automotive wheel or due to a negative pressure, both being generated during transportation of an automobile, is prevented by attaching the protective film to the outside of the disc surface of the automotive wheel and by forming a pressure release portion in the protective film.
Each of Patent Documents 2 to 8 discloses an automotive brake disc anti-rust film that has weatherability and is resistant to peeling from a wheel surface.

[Patent Documents]

[Patent Document 1] Japanese Patent Application Publication No. 2005-155758
[Patent Document 2] Japanese Patent Application Publication No. 2006-35914
[Patent Document 3] International Patent Publication Pamphlet No. 05/090453
[Patent Document 4] International Patent Publication Pamphlet No. 05/090098
[Patent Document 5] International Patent Publication Pamphlet No. 07/114450
[Patent Document 6] International Patent Publication Pamphlet No. 08/111663
[Patent Document 7] Japanese Patent Application Publication No. 3879985
[Patent Document 8] Japanese Patent Application Publication No. 2008-137547

DISCLOSURE OF THE INVENTION

Problem to be Solved by the Invention

If a cut portion for releasing pressure is formed, as in the protective film in Patent Document 1, there is the fear that a protective film may split when being attached to a wheel or being released therefrom. On the other hand, if a pressure release portion is not formed, there is the fear that a protective film may be peeled off from the external surface of an automotive wheel due to a pressure difference between the inside and outside of the wheel or to a negative pressure. If the adhesive force is enhanced to prevent such peeling, workability is deteriorated.
The present invention has been made in view of these situations, and a purpose of the invention is to provide a wheel protective film in which a state where the protective film is attached to a wheel of a vehicle, etc., can be stably maintained and workability in releasing the protective film from the wheel or a tire can be improved.

Means for Solving the Problem

In order to solve the aforementioned problem, a wheel protective film according to an embodiment of the present invention comprises a base layer and a pressure-sensitive adhesive layer provided on one surface of the base layer. In the wheel protective film, a ventilation portion through which air can pass from one surface to the other surface is formed; a trouser tear strength in the vertical direction (MD) of the film is 3 N or more; and a pressure-sensitive adhesive force thereof (adherend: acrylic clear-coated panel, after a lapse of 48 hours under the condition of 23°C × 50% RH) is 4.9 N/25 mm or more at a tensile speed of 0. 3 m/min. , and 19. 6 N/25 mm or less at a tensile speed of 30 m/min.
According to this embodiment, even in a state where the wheel protective film is being attached to a wheel, a pressure difference between the inside and outside of the wheel is reduced, and hence peeling of the protective film from the wheel can be suppressed. Further, because the trouser tear strength in the vertical direction (MD) of the wheel protective film is 3 N or more, a tear originating at the ventilation portion can be suppressed.

The ventilation portion may be a slit. The slit may be formed into an arc shape. Alternatively, the ventilation portion may be an open hole.

A plurality of the ventilation portions are formed, and they may be annularly arranged at intervals.

The wheel protective film has a circular shape and the plurality of the ventilation portions may be arranged concentrically with respect to the center of the wheel. The plurality of the ventilation portions may be arranged at equal intervals.

Advantage of the Invention

According to the present invention, a state where a protective film is being attached to a wheel of a vehicle, etc., can be stably maintained and the workability in releasing the protective film from the wheel or a tire can be improved.

BRIEF DESCRIPTION OF THE DRAWINGS

Fig. 1 is a front view of a protective film according to First Embodiment;
Fig. 2 is a sectional view of the protective film illustrated in Fig. 1, taken along A-A Line;
Fig. 3 is a perspective view for explaining a state where part of the protective film according to the present embodiment has been released from a separator;
Fig. 4 is a view illustrating a test specimen to be used in evaluating a tear strength;
Fig. 5 is a front view of a protective film according to Second Embodiment; and
Fig. 6 is a front view of a protective film according to a variation of Second Embodiment.

BEST MODE FOR CARRYING OUT THE INVENTION

Hereinafter, best modes for carrying out the present invention will be described in detail, with reference to the accompanying drawings and tables. In the following each embodiment, an automotive wheel is taken as an example to which a protective film is applied; however, objectives to which protective films are applied are not limited to such a wheel.

A wheel protective film (hereinafter, referred to as a "protective film") according to each of the embodiments described below has a base layer and a pressure-sensitive adhesive layer provided on one surface of the base layer. In the protective film, a ventilation portion through which air can pass from one surface to the other surface is formed. Further, in the protective film, a trouser tear strength in the vertical direction (MD) of the film is 3 N or more; and a pressure-sensitive adhesive force (adherend: acrylic clear-coated panel, after a lapse of 48 hours under the condition of 23°C $\times$ 50% RH) is 4. 9 N/25 mm or more at a tensile speed of 0.3 m/min., and 19.6 N/25 mm or less at a tensile speed of 30 m/min.

The trouser tear strength (hereinafter, also and simply referred to as "tear strength") in the vertical direction (MD) of the protective film is measured based on the later-described measurement method, and the strength is preferably 3 N or more, more preferably 4 N or more, and still more preferably 8 N or more. In addition to the aforementioned tear strength, the pressure-sensitive adhesive force of the protective film (adherend: acrylic clear-coated panel, after a lapse of 48 hours under the condition of 23°C $\times$ 50% RH), measured based on the later-described measurement method, is preferably 4.9 N/25 mm or more at a tensile speed of 0.3 m/min., and more preferably 5.5 N/25 mm or more (maximum is 20 N/25 mm or less); and is preferably 19.6 N/25 mm or less at a tensile speed of 30 m/min., more preferably 15 N/25 mm or less, and still more preferably 12 N/25 mm or less (minimum is 5 N/25 mm or more) . With both the tear strength and the pressure-sensitive adhesive force being within the aforementioned numeric value ranges, good release workability can be achieved and occurrence of a cut or tear in the protective film can be prevented, even when the protective film is released from a wheel at a high speed (10 m/min or 30 m/min).

In addition, the protective film according to each of the embodiments can prevent that a scratch may be created on or a stain may be adhered to the surface of a wheel before an automobile is delivered, and further prevent that rust may be caused in a disc brake arranged inside a wheel, while an automobile is being transported by ship for a long period of time for export of the automobile, etc. Also, when an automobile is delivered after being stored for a long period of time since protective films were attached to wheels, and when the protective films are intended to be swiftly released from the wheels, the protective film according to each of the embodiments can be easily released and can prevent occurrence of adhesive deposit, possibly occurring when the protective film is released. Furthermore, the problem that, when a protective film is released, a base layer may tear can be solved.

[First Embodiment]

(Protective Film)

The protective film according to the present embodiment is attached to the front side (outside) of the disc of a wheel when, as stated above, an automobile is transported by ship for a long period of time for export of the automobile, etc., so that occurrence of rust in the rotor (not illustrated) of a disc brake arranged inside the wheel is suppressed by temporarily blocking up a plurality of openings formed in the disc portion.

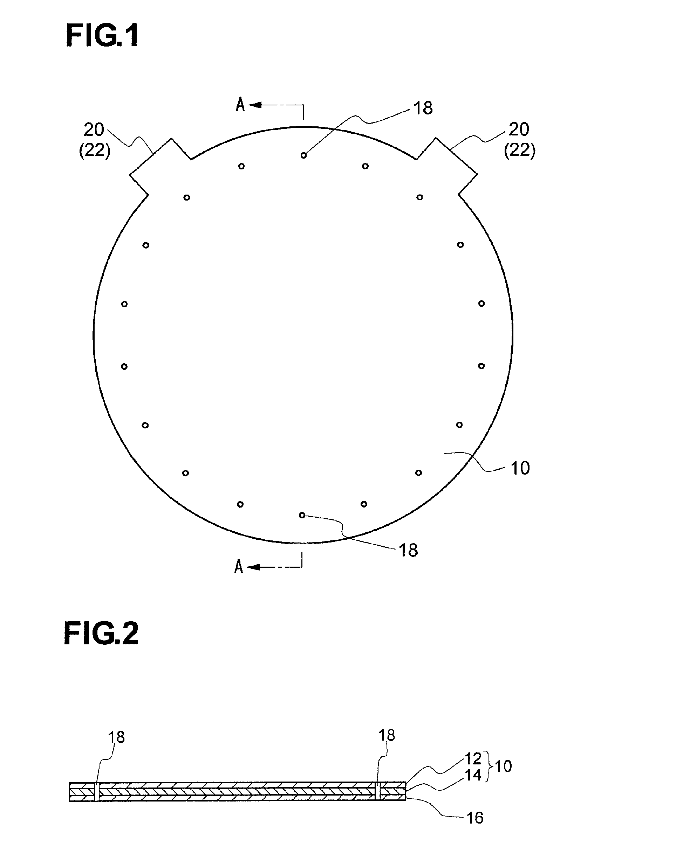

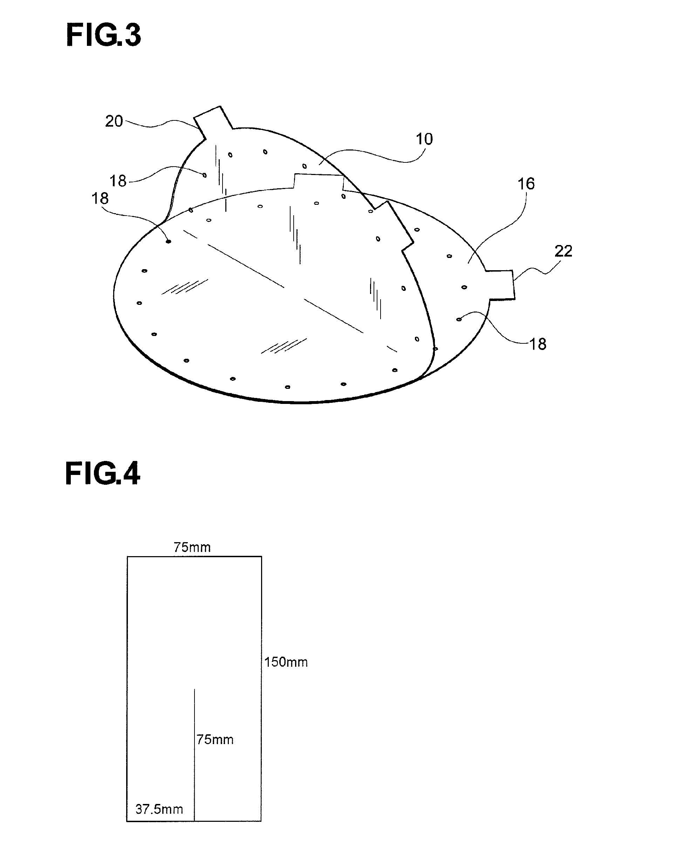

Fig. 1 is a front view of the protective film according to First Embodiment. Fig. 2 is a sectional view of the protective film illustrated in Fig. 1, taken along A-A Line. Fig. 3 is a perspective view for explaining a state where part of the protective film according to the present embodiment has been released from a separator. A separator for protecting a pressure-sensitive adhesive layer is attached to the protective film illustrated in Figs. 1 to 3. The thickness and the diameter of each layer illustrated in Fig. 2 are not necessarily illustrated in accordance with an actual scale ratio, but schematically illustrated for convenience of explanation.

A protective film 10 according to the present invention has a disc (circular) shape. As illustrated in Fig. 2, the protective film 10 has a base layer 12 and a pressure-sensitive adhesive layer 14 provided on one surface of the base layer 12. A separator 16 is attached to a surface of the pressure-sensitive adhesive layer 14, on which the base layer 12 is not formed. The separator 16 prevents that the surface of the pressure-sensitive adhesive layer 14 may be tainted and accordingly the pressure-sensitive adhesive force may be decreased during the time from when the protective film 10 is produced to when it is used.

In the protective film 10, a ventilation portion 18 through which air can pass from one surface to the other surface is formed. By attaching the protective film 10, in which the ventilation portion 18 is formed, to a wheel, a pressure difference between the inside and outside of the wheel is reduced, and accordingly peeling of the protective film from the wheel can be suppressed. The ventilation portion 18 is formed in a state where the protective film 10 and the separator 16 are integrated with each other, for easy production. Accordingly, the ventilation portion 18 is also formed in the separator 16; however, a ventilation portion is not necessarily needed in the separator 16.

In order to improve the workability in attaching the protective film 10 to a wheel or in releasing the protective film 10 from a wheel, a tab 20 is provided at the outer circumferential portion of the protective film 10. In addition, a tab 22 is provided so as to correspond to the tab 20 at the outer circumferential portion of the separator 16.

A plurality of the ventilation portions 18 according to the present embodiment are formed. Thereby, a pressure difference between the inside and outside of a wheel is more reduced than in the case where a single ventilation portion 18 is formed. The plurality of the ventilation portions 18 are annularly arranged. In particular, the plurality of the ventilation portions 18 according to the embodiment are arranged concentrically (coaxially) with respect to the center of the protective film 10. In addition, the plurality of the ventilation portions 18 are arranged at equal intervals. Thereby, air flows, passing through the ventilation portions 18 so as to reduce a pressure difference between the inside and outside of a wheel, are generated at positions located at equal intervals in the circumferential direction of the protective film 10. Accordingly, a force, oriented in a direction in which the protective film 10 is to be released from the wheel, acts uniformly on the adhesive surface of the film 10, and hence the protective film 10 becomes resistant to the peeling from the wheel.

(Pressure-Sensitive Adhesive Layer)

A pressure-sensitive adhesive layer to be used in the protective film 10 according to the present embodiment is not particularly limited, but it is preferable that the acrylic pressure-sensitive adhesive layer is made of a pressure-sensitive adhesive composition containing, for example, a (meth)acrylic polymer and a cross-linking agent, and it is more preferable that the aforementioned (meth)acrylic polymer contains, as a major component, a (meth) acrylic monomer having a $C_{1-14}$ alkyl group. The (meth)acrylic monomer that forms, as a major component, the aforementioned (meth) acrylic polymer is not particularly limited, as far as it is the aforementioned (meth) acrylic monomer having a $C_{1-14}$ alkyl group. The number of the carbon atoms is preferably within a range of 1 to 12, and more preferably within a range of 1 to 10. By using a (meth) acrylic monomer whose number of carbon atoms is within the aforementioned range, the initial adhesiveness and the adhesiveness in a low-temperature environment, such as in winter, can be secured, which is suitable for an application in which automotive wheels are protected. It is particularly preferable to contain a (meth)acrylic monomer having a $C_{1-4}$ alkyl group as a major component. The aforementioned (meth)acrylic monomer having a $C_{1-4}$ alkyl group is contained preferably in an amount within a range of 40 to 80% by mass, and more preferable in an amount within a range of 50 to 75% by mass, based on the total mass of the (meth) acrylic monomer having a $C_{1-14}$ alkyl group. By using the aforementioned (meth)acrylic monomer having a $C_{1-4}$ alkyl group in an amount within the aforementioned range, the protective film becomes effective, because the cohesive force of the pressure-sensitive adhesive is improved and adhesive deposit, possibly occurring when the protective film is released after use, can be prevented.

Examples of the aforementioned (meth) acrylic monomer having a $C_{1-14}$ alkyl group include, for example:

methyl(meth)acrylate, ethyl(meth)acrylate, propyl(meth)acrylate, n-butyl(meth)acrylate, isobutyl(meth)acrylate, sec-butyl(meth)acrylate, t-butyl(meth)acrylate, hexyl(meth)acrylate, cyclohexyl(meth)acrylate, t-butyl cyclohexyl(meth)acrylate, 2-ethylhexyl methacrylate, isoamyl(meth)acrylate, n-pentyl(meth)acrylate, isopentyl(meth)acrylate, cyclopentyl(meth)acrylate, n-octyl(meth)acrylate, isooctyl(meth)acrylate, cyclooctyl(meth)acrylate, n-nonyl(meth)acrylate, isononyl(meth)acrylate, n-decyl(meth)acrylate, isodecyl(meth)acrylate, n-dodecyl(meth)acrylate, isomyristyl(meth)acrylate, n-tridecyl(meth)acrylate, and n-tetradecyl(meth)acrylate, etc. Among them, ethyl(meth)acrylate, n-butyl(meth)acrylate, isobutyl(meth)acrylate, sec-butyl(meth)acrylate, and t-butyl(meth)acrylate, etc., are preferably used.

In the present embodiment, the aforementioned (meth) acrylic monomer having a $C_{1-14}$ alkyl group may be used alone or in combination of two or more thereof. The content of the aforementioned (meth)acrylic monomer having a $C_{1-14}$ alkyl group is preferably within a range of 40 to 90% by mass, and more preferably within a range of 50 to 80% by mass, based on the mass of the whole monomers. If the content is more than 90% by mass, the cohesive force of the pressure-sensitive adhesive is sometimes remarkably decreased, or if the content is less than 40% by mass, a decrease in the initial adhesiveness may be caused, which is not preferred.

The aforementioned (meth) acrylic polymer may contain another monomer component within a range not impairing the performance of the wheel protective film, other than the aforementioned (meth) acrylic monomer having a $C_{1-14}$ alkyl group. For example, a hydroxyl group-containing monomer can be used. By using the aforementioned hydroxyl group-containing monomer, the protective film becomes effective because the cross-linking property with a cross-linking agent is increased and adhesive deposit can be prevented. Examples of the aforementioned hydroxyl group-containing monomer include, for example, 2-hydroxyethyl(meth)acrylate, 2-hydroxypropyl(meth)acrylate, 4-hydroxy butyl(meth)acrylate, 2-hydroxyhexyl(meth)acrylate, 6-hydroxyhexyl(meth)acrylate, 8-hydroxyoctyl(meth)acrylate, 10-hydroxydecyl(meth)acrylate, 12-hydroxylauryl(meth)acrylate, (4-hydroxymethylcyclohexyl)methyl acrylate, N-methylol(meth)acrylamide, N-hydroxy(meth)acrylamide, vinyl alcohol, allyl alcohol, 2-hydroxyethyl vinyl ether, 4-hydroxybutyl vinyl ether, and diethylene glycol monovinyl ether, etc. Among them, 2-hydroxyethyl(meth)acrylate and 2-hydroxyhexyl (meth)acrylate, etc., can be preferably used.

In the present embodiment, the aforementioned hydroxyl group-containing monomers may be used alone or in combination of two or more thereof. The content of the aforementioned hydroxyl group-containing monomer is preferably within a range of 1 to 30% by mass, more preferably within a range of 2 to 20% by mass, and particularly preferable within a range of 3 to 10% by mass, based on the mass of the whole monomers. If the content is more than 30% by mass, the initial adhesiveness is sometimes decreased, or if the content is less than 1% by mass, a decrease in the cohesive force of the pressure-sensitive adhesive is caused, which is not preferred.

Further, the aforementioned (meth)acrylic polymer may contain a vinyl monomer that can be polymerized with the aforementioned (meth)acrylate having a $C_{1-14}$ alkyl group and the hydroxyl group-containing monomer. For example, a component that improves cohesive force or heat resistance property, such as a sulfonic group-containing monomer, phosphate group-containing monomer, cyano group-containing monomer, vinyl ester monomer, and aromatic vinyl monomer; a component having a functional group that acts for improving adhesive force or as a basic point of cross-linking, such as a carboxyl group-containing monomer, acid anhydride group-containing monomer, amide group-containing monomer, amino group-containing monomer, imido group-containing monomer, epoxy group-containing monomer, and vinyl ether monomer; or a (meth)acrylic monomer having another alkyl group, can be appropriately used. These monomer compounds may be used alone or in combination of two or more thereof.

Examples of the aforementioned sulfonic group-containing monomer include, for example, styrene sulfonic acid, allyl sulfonic acid, 2-(meth)acrylamide-2-methylpropanesulfonic acid, (meth)acrylamide propanesulfonic acid, sulfopropyl(meth)acrylate, and (meth)acryloyloxynaphthalenesulfonic acid, etc.

An example of the aforementioned phosphate group-containing monomer includes, for example, 2-hydroxyethylacryloyl phosphate.

Examples of the aforementioned cyano group-containing monomer include, for example, acrylonitrile and methacrylonitrile, etc.

Examples of the aforementioned vinyl ester monomer include, for example, vinyl acetate, vinyl propionate, vinyl laurate, and vinyl pyrrolidone, etc.

Examples of the aforementioned aromatic vinyl monomer include, for example, styrene, chloro styrene, chloro methyl styrene, $\alpha$-methylstyrene, and benzyl(meth)acrylate, etc.

Examples of the aforementioned carboxyl group-containing monomer include, for example, acrylic acid, methacrylic acid, carboxyethyl(meth)acrylate, carboxypentyl(meth)acrylate, itaconic acid, maleic acid, fumaric acid, and crotonic acid, etc. Among them, acrylic acid and methacrylic acid are particularly preferred.

Examples of the aforementioned acid anhydride group-containing monomer include, for example, maleic anhydride, and itaconic anhydride, etc.

Examples of the aforementioned amide group-containing monomer include, for example, acrylamide, methacrylamide, diethyl(meth)acrylamide, N-vinyl pyrrolidone, N-vinyl-2-pyrrolidone, N-(meth)acryloylpyrrolidone, N,N-dimethylacrylamide, N,N-dimethylmethacrylamide, N,N-diethylacrylamide, N,N-diethylmethacrylamide, N,N'-methylenebisacrylamide, N,N-dimethylaminopropylacrylamide, and N,N-dimethylaminopropyl methacrylamide etc.

Examples of the aforementioned amino group-containing monomer include, for example, N,N-dimethylaminoethyl(meth)acrylate, N,N-dimethylaminopropyl(meth)acrylate, N-(meth)acryloylmorpholine, and (meth)acrylic acid amino alkyl ester, etc.

Examples of the aforementioned imido group-containing monomer include, for example, cyclohexylmaleimide, isopropylmaleimide, N-cyclohexylmaleimide, and itaconimide, etc.

Examples of the aforementioned epoxy group-containing monomer include, for example, glycidyl(meth)acrylate and allyl glycidyl ether, etc.

Examples of the aforementioned vinyl ether monomer include, for example, methyl vinyl ether, ethyl vinyl ether, and isobutyl vinyl ether, etc.

In the present embodiment, vinyl monomers that can be polymerized may be used alone or in combination of two or more thereof. The content of the vinyl monomers as a whole is preferably within a range of 10 to 50% by mass, and more preferably within a range of 20 to 40% by mass, based on the mass of the whole monomer components of the (meth)acrylic polymer. If the content is more than 50% by mass, the initial adhesiveness is sometimes decreased, or if the content is less than 10% by mass, the cohesive force of the pressure-sensitive adhesive is sometimes decreased remarkably, which is not preferred.

From the viewpoint of easily balancing the pressure-sensitive adhesive performance, the glass transition temperature (Tg) of the aforementioned (meth) acrylic polymer is 0°C or lower (normally -100°C or higher), preferably -10°C or lower, and more preferably -20°C or lower. If the glass transition temperature is higher than 0°C, the polymer becomes resistant to flow and hence the wetting of an adherend is insufficient, thereby presenting the tendency that a blister may be caused between an automotive wheel and the pressure-sensitive adhesive layer of the protective film. The glass transition temperature (Tg) of the (meth)acrylic polymer can be adjusted so as to be within the aforementioned range by appropriately changing monomer components to be used or a composition ratio. A commonly-used value may be adopted as the glass transition temperature (Tg) (°C), and the numeric values, etc., described in, for example, Chapter VI, section 198-253 of Polymer Handbook Fourth Edition (by J. Brandup, et al., 1999, John Wiley & Sons, Inc), can be adopted. In the case of a new polymer, the peak temperature of a loss tangent (tan $\delta$) in a viscoelasticity measurement method (shearing method, measurement frequency: 1 Hz) may be adopted as the glass transition temperature (Tg).

As a method of manufacturing such the (meth)acrylic polymer, a publicly-known radical polymerization method, such as solution polymerization, bulk polymerization, emulsion polymerization, or the like, can be appropriately selected. The obtained (meth)acrylic polymer may be any one of a random copolymer, block copolymer, and graft copolymer, etc.

In the solution polymerization, a solvent selected from the group consisting of, for example, methyl ethyl ketone, acetone, ethyl acetate, tetrahydrofran, dioxane, cyclohexane, n-hexane, toluene, xylene, mesitylene, methanol, ethanol, n-propanol, isopropanol, water, and various aqueous solutions, can be adopted as a polymerization solvent. The reaction is carried out under a flow of an inert gas, such as nitrogen, and usually at approximately 60°C to 80°C for approximately 4 to 10 hours.

A polymerization initiator and a chain transfer agent, etc., to be used in the radical polymerization are not particularly limited, but the substances appropriately selected can be used.

Examples of the polymerization initiator to be used in the present embodiment include, for example: azo initiators, such as a 2,2'-azobisisobutyronitrile, 2,2'-azobis(2-amidinopropane)dihydrochloride, 2,2'-azobis[2-(5-methyl-2-imidazoline-2-yl)propane]dihydrochl oride, 2,2'-azobis(2-methylpropionamidine)disulfate, 2,2'-azobis(N,N'-dimethyleneisobutylamidine), 2,2'-azobis[N-(2-carboxyethyl)-2-methylpropionamidine]hydrate (made by Wako Pure Chemical Industries, Ltd., VA-057); peroxide initiators, such as persulfates including potassium persulfate and ammonium persulfate, etc., di (2-ethylhexyl)peroxidicarbonate, di(4-t-butylcyclohexyl)peroxidicarbonate, di-sec-butylperoxydicarbonate, t-butylperoxy neodecanoate, t-hexyl peroxypivalate, t-butyl peroxypivalate, dilauroyl peroxide, di-n-octanoyl peroxide, 1,1,3,3-tetramethylbutylperoxy-2-ethylhexanoate, di(4-methylbenzoyl)peroxide, dibenzoyl peroxide, t-butylperoxy isobutyrate, 1,1-di (t-hexylperoxy)cyclohexane, t-butyl hydroperoxide, and hydrogen peroxide; redox initiators in each of which a peroxide and a reducing agent are combined together, such as a combination of persulfate and sodium hydrogen sulfite and a combination of peroxide and sodium ascorbate; and the like. However, the polymerization initiator is not limited thereto.

The aforementioned polymerization initiators may be used alone or in combination of two or more thereof. The content thereof as a whole is preferably within a range of 0. 005 to 1 part by mass, and more preferably within a range of 0.02 to 0.5 parts by mass, based on 100 parts by mass of the monomers.

In the polymerization according to the present embodiment, a chain transfer agent may also be used. The molecular weight of the acrylic polymer can be appropriately adjusted by using the chain transfer agent.

Examples of the chain transfer agent include, for example, lauryl mercaptan, glycidyl mercaptan, mercaptoacetic acid, 2-mercaptoethanol, thioglycolic acid, thioglycolic acid 2-ethylhexyl, and 2,3-dimercapto-1-propanol, etc.

These chain transfer agents may be used alone or in combination of two or more thereof. The content thereof as a whole is within a range of approximately 0.01 to 0.1 parts by mass based on 100 parts by mass of the monomers.

It is possible and effective that the pressure-sensitive adhesive composition to be used in the present embodiment is made to be more excellent in weatherability and heat resistance, etc., by cross-linking the aforementioned (meth)acrylic polymer with a cross-linking agent. As the cross-linking agent to be used in the present invention, a compound having, in its molecule, two or more functional groups that can react (can be bound) with the functional groups in the aforementioned functional group-containing (meth)acrylic monomers can be used. Examples of the compound include an isocyanate compound, epoxy compound, oxazoline compound, melamine resin, aziridine derivative, and metal chelate compound, etc. Among them, an aspect in which an isocyanate compound is used is particularly preferable. These compounds may be used alone or in combination.

Among them, examples of the isocyanate compound include: aromatic isocyanates, such as tolylene diisocyanate and xylene diisocyanate; alicyclic isocyanates, such as isophorone diisocyanate; aliphatic isocyanates, such as hexamethylene diisocyanate; and emulsified isocyanates, etc.

Examples of more specific isocyanate compounds include: low aliphatic polyisocyanates, such as butylene diisocyanate and hexamethylene diisocyanate; alicyclic isocyanates, such as cyclopentylene diisocyanate, cyclohexylene diisocyanate, and isophorone diisocyanate; aromatic diisocyanates, such as 2,4-tolylene diisocyanate, 4,4'-diphenylmethane diisocyanate, and xylylene diisocyanate; isocyanate adducts, such as trimethylolpropane/tolylene diisocyanate trimeric adduct (made by Nippon Polyurethane Industry Co., Ltd., Product Name: CORONATE L), trimethylolpropane/hexamethylene diisocyanate trimeric adduct (made by Nippon Polyurethane Industry Co., Ltd., Product Name: CORONATE HL), and an isocyanurate compound of hexamethylene diisocyanate (made by Nippon Polyurethane Industry Co., Ltd., Product Name: CORONATE HX) ; self-emulsified polyisocyanate (made by Nippon Polyurethane Industry Co., Ltd. , Product Name: AQUANATE 200), etc. These isocyanate compounds may be used alone or in combination of two or more thereof.

Examples of the oxazoline compound include, for example, 2-oxazoline, 3-oxazoline, 4-oxazoline, 5-keto-3-oxazoline, and EPOCROS (made by Nippon Shokubai Co., Ltd.), etc. These compounds may be used alone or in combination.

Examples of the epoxy compound include, for example, polyglycidyl amine compounds, such as N,N,N',N'-tetraglycidyl-m-xylenediamine (Product Name: TETRAD-X, made by Mitsubishi Gas Chemical Company, Inc.), 1,3-bis (N,N-diglycidyl aminomethyl)cyclohexane (Product Name: TETRAD-C, made by Mitsubishi Gas Chemical Company, Inc.), tetraglycidyl diaminodiphenylmethane, triglycidyl-p-aminophenol, diglycidyl aniline, and diglycidyl-o-toluidine. These compounds may be used alone or in combination.

Examples of the melamine resin include hexamethylolmelamine and a water-soluble melamine resin, etc.

Example of the aziridine derivative include, for example, compounds with: a product name of HDU (made by Sogo Pharmaceutical Co, Ltd.); a product name of TAZM (made by Sogo Pharmaceutical Co, Ltd.); and a product name of TAZO (made by Sogo Pharmaceutical Co, Ltd.), which are commercially available, and the like. These compounds may be used alone or in combination.

Examples of the metallic component of the metal chelate compound include aluminum, iron, tin, titanium, and nickel, etc., and examples of the chelate component thereof include acethylene, methyl acetoacetate, and ethyl lactate, etc. These compounds may be used alone or in combination.

The content of these cross-linking agents is appropriately selected from the viewpoint of the balance with the (meth) acrylic polymer to be cross-linked and further as a wheel protective film. In order to acquire sufficient weatherability and heat resistance by the cohesive force of the (meth)acrylic polymer, the content is preferably within a range of 0.1 to 6 parts by mass, more preferably within a range of 0.2 to 4 parts by mass, and particularly preferably within a range of 0.4 to 2 parts by mass, based on 100 parts by mass of the aforementioned (meth) acrylic polymer. If the content of the cross-linking agent is less than 0.1 parts by mass, there is the tendency that the cross-link formation by the cross-linking agent becomes insufficient and hence the rate of solvent-insoluble matter may be decreased, and there is the tendency that the cohesive force of the pressure-sensitive adhesive layer becomes small and hence adhesive deposit may be caused. On the other hand, if the content thereof is more than 6 parts by mass, there is the tendency that: the initial adhesive force of the pressure-sensitive adhesive layer becomes insufficient, and the cohesive force of the polymer becomes large and the flow property is decreased, and hence the wetting of an adherend becomes insufficient, thereby possibly causing peeling.

In order to provide weatherability to the wheel protective film according to the present embodiment, a weathering stabilizer can be contained in the pressure-sensitive adhesive layer. The aforementioned weathering stabilizer means an ultraviolet ray absorbent, a light stabilizer, or an antioxidant, and these compounds may be used as a weathering stabilizer alone or in combination of two or more thereof. By using the aforementioned weathering stabilizer, peeling of the wheel protective film according to the embodiment and adhesive deposit can be prevented after being stored for a long period of time while the film is being attached to a wheel.

Examples of the aforementioned ultraviolet ray absorbent include, for example, a benzotriazol ultraviolet ray absorbent, triazine ultraviolet ray absorbent, benzophenone ultraviolet ray absorbent, salicylate ultraviolet ray absorbent, and cyanoacrylate ultraviolet ray absorbent, etc.

Specific examples of the aforementioned ultraviolet ray absorbent include, for example, 2-hydroxy-4-methoxybenzophenone, 2-hydroxy-4-n-octyloxy benzophenone, 2-(2'-hydroxy-5'-methylphenyl)benzotriazol, 2-(2'-hydroxy-3'-t-butyl-5'-methylphenyl)-5-chlorobenzotriazo le, 2-[2-hydroxy-3,5-bis($\alpha,\alpha$-dimethylbenzyl)phenyl]-2H-benzotria zol, 2,2'-methylenebis[4-(1,1,3,3-tetrabutyl)-6-(2H-benzotriazol)], 2-(4,6-diphenyl-1,3,5-triazine-2-yl)-5-[(hexyl)oxy]-phenol, 2,4-di-t-butylphenyl-3,5-di-t-butyl-4-hydroxybenzoate, 4-t-butylphenyl salicylate, and ethyl-2-cyano-3,3-diphenylacrylate, etc. These ultraviolet ray absorbents may be used alone or in combination of two or more thereof.

Among the above ultraviolet ray absorbents, it is preferable to use a benzotriazol ultraviolet ray absorbent. When the benzotriazol ultraviolet ray absorbent is used, weatherability can be further improved, and hence it can be further prevented that a decrease in the pressure-sensitive adhesive force, occurring due to bleeding of an ultraviolet ray absorbent, may be caused. As a result, even when the protective film is stored for a long period of time since the film was attached to a wheel, the pressure-sensitive adhesive force can be sufficiently maintained. Accordingly, it can be sufficiently prevented that the film may be peeled off from the wheel due to a decrease in the pressure-sensitive adhesive force, while an automobile is driving. Further, adhesive deposit, which may be caused after being stored for a long period of time, can be sufficiently prevented.

The content of the ultraviolet ray absorbent in the aforementioned pressure-sensitive adhesive layer is preferably within a range of 0.05 to 2 parts by mass, and more preferably within a range of 0.1 to 1.5 parts by mass, based on 100 parts by mass of the resin solids in the acrylic pressure-sensitive adhesive contained in the aforementioned pressure-sensitive adhesive layer. If the content is less than 0.05 parts by mass, there is the fear that the effect of improving weatherability may not be obtained. If the content is more than 2 parts by mass, there is the fear that the ultraviolet ray absorbent may bleed.

Conventionally and publicly known light stabilizers can be used as the aforementioned light stabilizer. Publicly-known light stabilizers, such as, for example, a hindered amine light stabilizer and a benzoate light stabilizer, can be appropriately used. Among them, when a hindered amine light stabilizer (HALS: Hindered Amine Light Stabilizer) is particularly used, weatherability can be further improved, and hence it can be further prevented that the pressure-sensitive adhesive force may be decreased due to the bleeding of the light stabilizer. As a result, even when the protective film is stored for a long period of time since the film was attached to a wheel, the pressure-sensitive adhesive force can be sufficiently maintained. Accordingly, it can be sufficiently prevented that the film may be peeled off from the wheel due to a decrease in the pressure-sensitive adhesive force, while an automobile is driving. Further, adhesive deposit, which may be caused after being stored for a long period of time, can be sufficiently prevented.

Examples of the aforementioned hindered amine light stabilizer include, for example, bis-(2,2,6,6-tetramethyl-4-piperidyl)sebacate, [dimethyl succinate-1-(2-hydroxyethyl)-4-hydroxy-2,2,6,6-tetramethylpip eridine]condensate, 1,2,2,6,6-pentamethyl-4-piperidyl-tridecyl-1,2,3,4-butanetetr acarboxylate, 1,2,2,6,6-pentamethyl-4-piperidinol, and an ester of 3,9-bis(2-hydroxy-1,1-dimethylethyl)-2,4,8,10-tetraspiro[5,5] undecane and a butanetetracarboxylic acid, etc. These light stabilizers may be used alone or in combination of two or more thereof.

Specific examples of the aforementioned hindered amine light stabilizer include, for example: reaction types, such as ADK STAB LA-82 and LA-87 made by ADEKA CORPORATION; monomer types, such as HOSTAVIN N-20 made by Hoechst Japan Co., Ltd., Tomisoap 77 made by Yoshitomi Fine Chemicals, Ltd., and Sanol LS-770 made by SANKYO LIFETECH CO. , LTD. ; and oligomer types, such as Uvinal 5050H made by BASF Japan Ltd.

The content of the aforementioned light stabilizer in the aforementioned pressure-sensitive adhesive layer is preferably within a range of 0.05 to 2 parts by mass, and more preferably within a range of 0.05 to 1.5 parts by mass, based on 100 parts by mass of the resin solids in the acrylic pressure-sensitive adhesive contained in the pressure-sensitive adhesive layer. If the content is less than 0.05 parts by mass, there is the fear that the effect of improving weatherability may not be obtained. If the content is more than 2 parts by mass, there is the fear that the light stabilizer may bleed.

Publicly-known antioxidants, for example, such as a hindered phenolic antioxidant, phosphorus processing heat stabilizer, lactone processing heat stabilizer, and sulfur heat resistance stabilizer, can be appropriately used as the antioxidant. These antioxidants may be used alone or in combination of two or more thereof.

The addition amount of the aforementioned antioxidant is preferably 3 parts by mass or less, more preferably 1 part by mass or less, and still more preferably within a range of approximately 0.01 to 0.5 parts by mass, based on 100 parts by mass of the base polymer in each resin layer.

Alternatively, a tackifier may be added to the aforementioned pressure-sensitive adhesive composition. The tackifier is not particularly limited, but tackifiers conventionally-used in pressure-sensitive adhesives can be used. Examples of the tackifier include, for example: modified rosin resins, such as a xylene resin, rosin and polymerized rosin, hydrogenated rosin, and rosin ester; terpene resins, such as a terpene resin, terpene phenol resin, rosin phenol resin; aliphatic, aromatic, and alicyclic petroleum resins; cumarone resins; styrene resins; and alkylphenol resins, etc. Among them, a rosin resin, aromatic petroleum resin, and terpene phenol resin can be preferably used from the viewpoint of being excellent in the adhesiveness with automotive wheels, such as an aluminum wheel. These tackifiers may be used alone or in combination of two or more thereof.

The content of the aforementioned tackifier in the pressure-sensitive adhesive layer is preferably within a range of 1 to 100 parts by mass, and more preferably within a range of 5 to 50 parts by mass, based on 100 parts by mass of the resin solids in the acrylic pressure-sensitive adhesive contained in the pressure-sensitive adhesive layer. If the content is less than 1 part by mass, there is the fear that the adhesive force of the pressure-sensitive adhesive layer may be insufficient. If the content is more than 100 parts by mass, the film cannot be released completely from an automotive wheel, when it is to be released from the wheel, thereby causing the fear that the adhesive may remain on the wheel.

The aforementioned pressure-sensitive adhesive composition may further contain other publicly-known additives. For example, powders, such as colorant or pigment, dye, surfactant, plasticizer, surface lubricant, leveling agent, surfactant, softener, antistatic agent, inorganic or organic filler, metallic powder, or particle-shaped or foil-shaped substance, can be appropriately added in accordance with an application in which the protective film is used. The blending amount of these optional components can be the amount typically used in the field of surface protective materials.

As a method of manufacturing the wheel protective film according to the present embodiment, a method of forming a pressure-sensitive adhesive layer on a base layer can be used. The method is not particularly limited, but the protective film can be manufactured by, for example: a method in which the pressure-sensitive adhesive composition is coated on a separator subjected to a release treatment, and the pressure-sensitive adhesive layer is transfer-formed on the base layer by drying and removing a polymerization solvent; a method in which the pressure-sensitive adhesive composition is coated on the base layer, and the pressure-sensitive adhesive layer is formed on the base layer by drying and removing a polymerization solvent; or the like. Subsequently, an aging treatment may be performed in order to adjust the move of a component in the pressure-sensitive adhesive layer or adjust a cross-linking reaction. When the wheel protective film is manufactured by coating the pressure-sensitive adhesive composition on the base layer, one or more types of solvents, other than the polymerization solvent, may be newly added to the pressure-sensitive adhesive composition, so that the composition can be uniformly coated on the base layer.

Examples of the solvent to be used in the present embodiment include, for example: methyl ethyl ketone, acetone, ethyl acetate, tetrahydrofuran, dioxane, cyclohexanone, n-hexane, toluene, xylene, mesitylene, methanol, ethanol, n-propanol, isopropanol, water, and various aqueous solutions, etc. These solvents may be used alone or in combination of two or more thereof.

Publicly-known methods to be used in the manufacture of surface protective films can be used as a method of forming the pressure-sensitive adhesive layer according to the present embodiment. Specific examples of the method include extrusion coating methods, by using, for example, a roll coat, kiss-roll coat, gravure coat, reverse coat, roll brush, spray coat, dip roll coat, bar coat, knife coat, air knife coat, and die coater, etc.

The thickness of the aforementioned pressure-sensitive adhesive layer is not particularly limited, but is appropriately selected. For example, the thickness is preferably within a range of 3 to 50 $\mu$m, and more preferably within a range of 5 to 40 $\mu$m. Thereby, the adhesiveness and adhesive force between the pressure-sensitive adhesive layer and an automotive wheel can be improved. If the thickness is less than 3 $\mu$m, there is the fear that sufficient adhesiveness and adhesive force may not be obtained. On the other hand, if the thickness is more than 50 $\mu$m, improvement of the effects cannot be expected, thereby causing the fear that it may become disadvantageous economically.

The surface of the pressure-sensitive adhesive layer may be subjected to a surface treatment, such as a corona treatment, plasma treatment, ultraviolet treatment, or the like.

In the present embodiment, the gel fraction of the pressure-sensitive adhesive layer, which is measured based on the later-described measurement method, is preferably within a range of 60 to 95% by mass, more preferably within a range of 70 to 93% by mass, and in particular, preferably within a range of 75 to 90% by mass. If the gel fraction is less than 60% by mass, the cohesive force is decreased, thereby sometimes causing the pressure-sensitive adhesive layer to be inferior in impact resistance (durability). On the other hand, if the gel fraction is more than 95% by mass, the pressure-sensitive adhesive layer is sometimes inferior in adhesiveness.

The gel fraction of the pressure-sensitive adhesive layer can be adjusted by the addition amount of a cross-linking agent, the cross-linking treatment conditions (heating treatment temperature, heating time, etc.), or the like. The cross-linking treatment may be performed at the temperature in the step where the pressure-sensitive adhesive layer is dried, or performed in a cross-linking treatment step separately provided after the step where the pressure-sensitive adhesive layer is dried.

In the present embodiment, the weight average molecular weight (Mw) of the sol portion in the pressure-sensitive adhesive layer, which is measured based on the later-described measurement method, is preferably within a range of 5000 to 300000, and more preferably within a range of 10000 to 200000. When the Mw is within the aforementioned range, it is preferable because the adhesiveness and the cohesiveness of the pressure-sensitive adhesive layer are balanced with each other and because contamination of an adherend (automotive wheel) by a substance having a low molecular weight can be prevented.

The degree of swelling of the pressure-sensitive adhesive layer in the present embodiment, which is measured by the later-described measurement method, is preferably within a range of 5 to 40 times, and more preferably within a range of 10 to 30 times. If the degree of swelling is outside the aforementioned range, there is the tendency that the effect of improving the adhesiveness to an adherend (automotive wheel) may become poor.

When the surface of the pressure-sensitive adhesive layer to be used in the wheel protective film according to the present embodiment is exposed, the pressure-sensitive adhesive layer may be protected by a sheet subjected to a release treatment (release sheet, separator, release liner) before the layer is put in practical use.

Examples of the material that forms the separator (release sheet, release liner) include appropriate thin-walled bodies, etc., such as, for example: plastic films including polyethylene, polypropylene, polyethylene terephthalate, and polyester films, etc.; porous materials including paper, cloth, nonwoven fabric, etc.; nets; foamed sheets; metallic foils; and laminated bodies thereof. Among them, paper can be preferably used from the viewpoint of being excellent in surface smoothness.

The film is not particularly limited, as far as the film can protect the aforementioned pressure-sensitive adhesive layer. Examples of the film include, for example, a polyethylene film, polypropylene film, polybutene film, polybutadiene film, polymethylpentene film, polyvinyl chloride film, vinyl-chloride copolymer film, polyethylene terephthalate film, polybutylene terephthalate film, polyurethane film, ethylene-vinylacetate copolymer film, etc.

The thickness of the separator is usually within a range of 5 to 200 $\mu$m, and preferably within a range of approximately 5 to 100 $\mu$m.

The separator may also be subjected, if necessary, to: a mold release and anti-stain treatment by a mold-release agent, such as a silicone amide, fluorine amide, long-chain alkyl amide, or fatty-acid amide, or by silica powders, etc.; or an antistatic treatment, such as a coating type, kneading type, or vapor-deposited type treatment. In particular, by appropriately performing, on the surface of the aforementioned separator, a release treatment, such as a silicone treatment, long-chain alkyl treatment, fluorine treatment, or the like, the release property from the pressure-sensitive adhesive layer can be enhanced.

In the aforementioned manufacturing method, the sheet subjected to a release treatment (release sheet, separator, release liner) can be used, as it is, as the separator for the wheel protective film, thereby allowing the steps to be simplified.

The wheel protective film according to the present embodiment is made with a pressure-sensitive adhesive layer having the aforementioned structure being formed on one or both surfaces of the base layer.

In the present invention, the film means a planar material and includes a material usually referred to as a tape or sheet.

(Base Layer)

It is preferable that the base layer according to the present embodiment is formed of a polyethylene resin layer made of a polyethylene resin from the viewpoints of weatherability (water resistance, moisture resistance, heat resistance, etc.), impact resistance (tear strength, etc.), and transparency. Examples of the polyethylene resin layer include, for example: ethylene polymers (low-density, high-density, linear low-density polyethylene resin, etc.); olefin polymers, such as ethylene-$\alpha$ olefin copolymer; and resin layers made of olefin polymers, etc. , the olefin polymers being formed of both ethylene in an ethylene-vinyl acetate copolymer, ethylene-methyl methacrylate copolymer, ethylene-propylene copolymer, or ethylene-propylene-$\alpha$ olefin copolymer, etc., and another monomer. It is particularly preferable that the base layer is formed of a low-density polyethylene. By using these polyethylene layers, the base layer becomes preferable from the viewpoints of weatherability, impact resistance, and transparency.

It is a more preferred aspect that the aforementioned base material is particularly formed of a low-density polyethylene resin and is a single layer. A base layer formed by combining multiple different types of polyolefin resins, such as polyethylene and polypropylene, is likely to be brittle, and there is the fear that the base layer may tear when the film (surface protective film) is released. In addition, a tear of the base layer occurs when the film is released at a high speed, which is not preferable.

The base layer may be formed of an oriented resin film or a non-oriented resin film. In addition, the aforementioned polyethylene resin layers may be used alone or in combination in which two or more thereof are bonded together.

The thickness of the base layer is not particularly limited, but is preferable, for example, within a range of 10

to 200 μm, and more preferably within a range of 30 to 150 μm. There is the tendency that, if the thickness is less than 10 μm, the bonding workability becomes poor, and if the thickness is more than 200 μm, the following property to a curved surface becomes poor.

In order to improve the adhesiveness with another resin layer, the pressure-sensitive adhesive layer, and a primer coat, etc., the surface of the base layer (or each resin layer) may be subjected to a surface treatment, such as a corona treatment, plasma treatment, ultraviolet treatment, or the like. The base layer (resin layer) may also be subjected to a back treatment.

In addition, from the viewpoint of weatherability, the base layer can also be appropriately subjected to a treatment using a weathering stabilizer, within a range not impairing the transparency, etc., of the present invention.

The treatment using the aforementioned weathering stabilizer (an ultraviolet ray absorbent, light stabilizer, antioxidant) can be performed with the stabilizer being coated or transferred onto the surface of the resin layer, or with the stabilizer being kneaded into the resin layer, etc.

Arbitrary additives, such as a flame retarder, inactive inorganic particles, organic particles, lubricant, antistatic agent, and pigment, can also be blended with the aforementioned base layer, within a range not impairing the advantages of the present embodiment.

Further, it is preferable in the present embodiment that, in order to be used in a surface protective film for automotive wheels, the base layer is formed of a resin film that is heat resistant and solvent resistant and has flexibility. With the base layer having flexibility, the pressure-sensitive adhesive composition can be coated by a roll coater and the protective film can be wound into a roll shape.

The aforementioned base layer may also be subjected, if necessary, to: a mold release and anti-stain treatment by a mold-release agent, such as a silicone amide, fluorine amide, long-chain alkyl amide, or fatty-acid amide, or by silica powders, etc. ; an acid treatment; an alkali treatment; a primer treatment; or an antistatic treatment, such as a coating type, kneading type, or vapor-deposited type treatment.

Also, the base layer may be appropriately provided with a surface coated layer, such as, for example, a hard coated layer or a soft coated layer, if necessary. Examples of such a surface coated layer include silicone, melamine, urethane, silane, or acrylate thermosetting or chemically reacting surface coated layers. Thereby, a surface protective film for automotive wheels can be obtained, which is more excellent in abrasion-resistance, chemical resistance, weatherability, and anti-fogging property.

Because the wheel protective film according to the present embodiment has a function excellent in weatherability, adhesion reliability, transparency, and impact resistance by using the aforementioned pressure-sensitive adhesive layer and base layer, the film is suitable for a wheel protective film that is stored and distributed outdoors, etc., for a long period of time.

In the present embodiment, the wheel protective film means one for protecting, indoors or outdoors, the surface of a wheel for an automobile, etc. Examples of the films include, for example: films for protecting the surfaces of wheels used in various vehicles, such as compact automobiles, passenger cars, large automobiles, special vehicles, heavy machines, and motorcycles; and films to be used for exerting an effect of preventing rust in disc brakes arranged inside wheels.

Materials of automotive wheels to which the aforementioned wheel protective films are to be attached are not particularly limited, as far as the materials are used as materials of wheels. Among them, aluminum is preferably used from the viewpoint that the adhesive force of the protective film is relatively large after a long period of storage while the protective film is being attached thereto and adhesive deposit can be sufficiently prevented.

[Examples]

Hereinafter, examples, etc., specifically indicating the structures and advantages of the present embodiments will be described, but the present invention is not limited thereto. Evaluation items in Examples were measured as follows.

[Example 1]

(Preparation of (Meth)acrylic Polymer)

After 30 parts by mass of 2-ethylhexyl acrylate, 70 parts by mass of ethyl acrylate, 5 parts by mass of methyl methacrylate, 4 parts by mass of 2-hydroxyethyl acrylate, 0.2 parts by mass of 2,2'-azobisisobutyronitrile, as a polymerization initiator, and 200 parts by mass of ethyl acetate were placed in a 4-neck flask provided with an impeller, thermometer, nitrogen gas inlet pipe, and cooler, nitrogen gas was introduced while they were being stirred gently. The liquid temperature in the flask was maintained at approximately 65°C and a polymerization reaction was performed for approximately 6 hours to prepare a (meth) acrylic polymer solution (35% by mass). The glass transition temperature (Tg) of the aforementioned (meth)acrylic polymer was -29°C.

(Preparation of Pressure-Sensitive Adhesive Solution)

The aforementioned (meth) acrylic polymer solution (35% by mass) was diluted to 20% by mass with ethyl acetate. Based on 100 parts by mass of (meth) acrylic polymer solids in this solution, 0.6 parts by mass of an isocyanate compound (CORONATE L made by NIPPON POLYURETHANE INDUSTRY CO., LTD.), 0.05 parts by mass of dibutyltin dilaurate (1% by mass ethyl acetate solution), as a cross-linking catalyst, and 1 part by mass of a light stabilizer (Sanol LS-770 made by SANKYO LIFETECH CO. , LTD.), as a weathering stabilizer, were added, and then mixed and stirred together under room temperature (25°C) for approximately 1 minute to prepare a (meth)acrylic pressure-sensitive adhesive solution (A).

(Production of Wheel Protective Film)

A low-density polyethylene resin (PETROSEN 180, density: 0.922 g/cm$^3$, made by TOSOH CORPORATION) was extruded, by an inflation method, from a dice heated to 160°C to form a polyethylene film having a thickness of 75 μm, and a corona treatment was performed on one surface of the polyethylene film. The aforementioned (meth)acrylic pressure-sensitive adhesive solution (A) was coated on the surface subjected to the corona treatment, and a pressure-sensitive adhesive layer having a thickness of 10 μm was formed by heating the solution (A) at 90°C for 1 minute, thereby producing a wheel protective film. Thereafter, the film was cut into a circle having a diameter of 405 mm, and ventilation portions were secured by forming 18 circular holes each having a diameter of 5 mm at equal intervals, as illustrated in Fig. 3.

[Example 2]

A wheel protective film was produced in the same way as in Example 1, except that a (meth)acrylic pressure-sensitive adhesive solution (B), which had been obtained by blending 0.8 parts by mass of the aforementioned isocyanate compound (CORONATE L, made by NIPPON POLYURETHANE INDUSTRY CO., LTD.), was used. Thereafter, the protective film was cut into a circular shape having a diameter of 405 mm, and ventilation portions were secured by forming 18 circular holes each having a diameter of 5 mm at equal intervals, as illustrated in Fig. 3.

[Example 3]

A wheel protective film was produced in the same way as in Example 1, except that a (meth)acrylic pressure-sensitive adhesive solution (C), which had been obtained by blending 1.0 part by mass of the aforementioned isocyanate compound (CORONATE L, made by NIPPON POLYURETHANE INDUSTRY CO., LTD.), was used. Thereafter, the protective film was cut into a circular shape having a diameter of 405 mm, and ventilation portions were secured by forming 18 circular holes each having a diameter of 5 mm at equal intervals, as illustrated in Fig. 3.

[Comparative Example 1]

(Preparation of (Meth)acrylic Polymer)

After 100 parts by mass of butyl acrylate, 5 parts by mass of acrylic acid, 0.2 parts by mass of benzoyl peroxide, as a polymerization initiator, and 157 parts by mass of toluene were placed in a 4-neck flask provided with an impeller, thermometer, nitrogen gas inlet pipe, and cooler, nitrogen gas was introduced while they were being stirred gently. The liquid temperature in the flask was maintained at approximately 65°C and a polymerization reaction was performed for approximately 6 hours to prepare a (meth)acrylic polymer solution (40% by mass).

(Preparation of Pressure-Sensitive Adhesive Solution)

After the aforementioned (meth)acrylic polymer solution (40% by mass) was diluted with 20% by mass of toluene, 4.0 parts by mass of an isocyanate compound (CORONATE L, made by NIPPON POLYURETHANE INDUSTRY CO., LTD.), 20 parts by mass of a terpene-modified phenolic resin (SUMILITE RESIN PR-12603N, made by SUMITOMO BAKELITE CO., LTD.), and 30 parts by mass of xylene resin (NIKANOL H-80, made by MITSUBISHI GAS CHEMICAL COMPANY, INC.) were added, based on 100 parts by mass of (meth)acrylic polymer solids in this solution. They were mixed and stirred together at 25°C for approximately 1 minute to prepare a (meth)acrylic pressure-sensitive adhesive solution (D).

(Production of Wheel Protective Film)

After 45 % by mass of a homopolypropylene resin (PM600A, density: 0.9 g/cm$^3$, made by SunAllomer, Inc.), 45% by mass of a random polypropylene resin (PC630S, density: 0.9 g/cm$^3$, made by SunAllomer, Inc.), and 10% by mass of a low-density polyethylene resin (PETROSEN 180, density: 0.922 g/cm$^3$, made by TOSOH CORPORATION) were blended together, they were extruded, by a T-die method, from a dice heated to 220°C to form a blend film having a thickness of 40μm, and a corona treatment was performed on one surface of the film. The aforementioned (meth) acrylic pressure-sensitive adhesive solution (D) was coated on the surface subjected to the corona treatment, and a pressure-sensitive adhesive layer having a thickness of 10 μm was formed by heating the solution (D) at 90°C for 1 minute, thereby producing a wheel protective film. Thereafter, the film was cut into a circle having a diameter of 405 mm.

[Comparative Example 2]

A protective film was produced in the same way as in Example 3, except that the ventilation portions in Example 3 were not formed.

[Comparative Example 3]

After the (meth)acrylic pressure-sensitive adhesive solution (C) in Example 3 was coated on the surface of the blend film in Comparative Example 1, the surface having been subjected to a corona treatment, a pressure-sensitive adhesive layer having a thickness of 10 μm was formed by heating the coated solution (C) at 90°C for 1 minute, thereby producing a wheel protective film. Thereafter, the film was cut into a circle having a diameter of 405 mm, and ventilation portions were secured by forming 18 circular holes each having a diameter of 5 mm at equal intervals, as illustrated in Fig. 3.

[Evaluation]

Each of the protective films, which were obtained in Examples, etc., and used as test samples, was evaluated as follows, and the results were shown in Tables 1 and 2.

(Gel Fraction)

A gel fraction was measured in the following way. After a predetermined amount (approximately 500 mg) of the pressure-sensitive adhesive layer was collected by being scraped from the obtained wheel protective film, the collected layer was enveloped with a porous tetrafluoroethylene sheet having an average pore diameter of 0. 2 μm (product name: "NTF1122" made by NITTO DENKO CORPORATION) and tied with a kite string to measure the mass at the time, the mass being assumed as a mass before dipping. The mass before dipping was the total mass of the pressure-sensitive adhesive layer, the tetrafluoroethylene sheet, and the kite string. The mass of each of the porous tetrafluoroethylene sheet and the kite string, which were to be used herein, was measured in advance, the total mass of the two being assumed as a package mass. Subsequently, a sample, in which the aforementioned pressure-sensitive adhesive layer was enveloped by the porous tetrafluoroethylene sheet and tied with the kite string, was placed into a 50 mi-container whose weight had been measured in advance, and the container was filled with ethyl acetate and left at rest at room temperature (23°C) for 7 days. Thereafter, the sample was taken out of the container and the ethyl acetate was removed by being dried in a dryer at 130°C for 2 hours. Thereafter, the mass of the sample was measured, the mass being assumed as a mass after dipping. The gel fraction was calculated from the following equation:

$$\text{Gel Fraction (\% by mass)} = (A-B)/(C-B) \times 100,$$

wherein A is the mass after dipping, B is the package mass, and C is the mass before dipping.

(Molecular Weight of Sol Portion)

A weight average molecular weight of a sol portion was measured in the following way. The ethyl acetate was completely dried after the measurement of the aforementioned gel fraction, and a THF solution was prepared such that the concentration of the gel portion was 5.0 g/L and left at rest overnight. This solution was filtered by a membrane filter made of Teflon® having a thickness of 0.45 μm. The weight average molecular weight of the obtained filtrate was calculated, by polystyrene conversion with the use of a GPC method, as the weight average molecular weight of the sol portion. An analyzing apparatus used herein was HLC8120GPC made by TOSOH.

(Degree of Swelling)

A degree of swelling means a value (times) calculated as W2/W1 in which: W1 is a total weight before dipping (the pressure-sensitive adhesive layer, tetrafluoroethylene sheet, and kite string) of the sample for the measurement of the gel fraction; and W2 is a wet mass of the sample when the sample was taken out of ethyl acetate (the ethyl acetate adhered to the surfaces of insoluble substances was wiped out), after the sample had been dipped therein at room temperature (e.g., 23°C) for 7 days.

$$\text{(Degree of swelling)} = \text{(W2/W1)}$$

A pressure-sensitive adhesive force was measured under the conditions described below.

(Production of Test Specimen)

After an aluminum plate having a thickness of 2 mm was provided, and an acrylic melamine coating for aluminum wheel (SUPERLAC 5000AW-10 Clear, made by NIPPON PAINT Co., Ltd.) was uniformly coated on the surface of the aluminum plate by using a spray gun. The coated plate that had been dried at 150°C for 1 hour was used as an adherend (hereinafter, also referred to as an acrylic clear coated panel). Subsequently, the surface of the aforementioned adherend was cleaned by using an alcohol (ethyl alcohol, isopropyl alcohol, or the like), and the protective film cut into a size of 25 mm in width $\times$ 100 mm in length was attached to the adherend (acrylic clear coated panel) by using an attaching machine under the conditions in which linear pressure was 78.5 N/cm and speed was 0.3 m/min, thereby producing a test specimen. The test specimens and protective films to be used in the evaluation were left at rest under the environment of 23 $\pm$ 2°C and 50 $\pm$ 5% RH for 2 hours or longer. Measurements were performed under the conditions described below.

(Ordinary State Pressure-Sensitive Adhesive Force)

An ordinary state pressure-sensitive adhesive force was measured in the following way: the aforementioned test specimen was left uncontrolled, for 48 hours, in a constant temperature and moisture test chamber whose temperature and moisture were adjusted to 23 $\pm$ 2°C and 50 $\pm$ 5% RH; and the test specimen was then stretched with the acrylic clear-coated panel being sandwiched by the lower chuck of a tensile tester (Autograph, made by Shimadzu Corporation) and with one end of the protective film, which had been cut into a size of 25 mm in width $\times$ 100 mm in length to be attached, being sandwiched by the upper chuck thereof, under the conditions in which a tensile speed was 0.3 m/min and a releasing angle was 180° direction. Also, an ordinary state pressure-sensitive adhesive force was measured by stretching the test specimen with the acrylic clear-coated panel being loaded onto the main body of a high-speed releasing tester (made by TESTER SANGYO CO., LTD.) and with one end of the protective film, which had been cut into a size of 25 mm in width $\times$ 100 mm in length to be attached, being sandwiched by the chuck thereof, under the conditions in which a tensile speed was 30 m/min and a releasing angle was 180° direction.

(Heat-Resistant Pressure-Sensitive Adhesive Force)

A heat-resistant pressure-sensitive adhesive force of the aforementioned test specimen, which had been left uncontrolled, for 500 hours, in a circulating hot air dryer whose temperature had been adjusted to 80 $\pm$ 2°C, was measured by stretching the test specimen under the conditions in which a tensile speed was 0.3 m/min and 30 m/min and a releasing angle was 180° direction.

(Moisture-Resistant Pressure-Sensitive Adhesive Force)

A moisture-resistant pressure-sensitive adhesive force of the aforementioned test specimen, which had been left uncontrolled, for 500 hours, in a constant temperature and moisture test chamber whose temperature and moisture had been adjusted to 50 $\pm$ 2°C and 95 $\pm$ 3% RH, was measured by stretching the test specimen under the conditions in which a tensile speed was 0. 3 m/min and 30 m/min and a releasing angle was 180° direction.

(Trouser Tear Strength)

Fig. 4 is a view illustrating a test specimen to be used in evaluating a tear strength. As illustrated in the view, a protective film was cut into a size of 150 mm long × 75 mm wide, and further a cut having a length of 75 mm was made from the center of the narrow side in the right-angled (vertical) direction, thereby producing a test specimen. The test specimen was teared with a portion of the test specimen, located left from the cut, being sandwiched by the lower chuck of a tensile tester (Autograph, made by Shimadzu Corporation) and with a portion thereof, located left from the cut, being sandwiched by the upper chuck thereof, at a tensile speed of 0.3 m/min. The maximum load (maximum stress) was assumed as a trouser tear strength (N) in the vertical direction (MD). A test specimen to be used in the evaluation was made by a protective film that has been left at rest under the condition of 23 ± 2°C × 50 ± 5% RH for 48 hours.

[Table 1]

| EVALUATION RESULTS | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|
| (METH)ACRYLIC PRESSURE-SENSITIVE ADHESIVE SOLUTION | A | B | C | D | C | C |
| GEL FRACTION (%) OF PRESSURE-SENSITIVE ADHESIVE LAYER | 79.8 | 83.4 | 85.5 | 30.0 | 85.6 | 85.5 |
| MASS AVERAGE MOLECULAR WEIGHT (Mw) OF SOL PORTION | $1.4 \times 10^5$ | - | $8.9 \times 10^4$ | $4.2 \times 10^5$ | $8.8 \times 10^4$ | $8.9 \times 10^4$ |
| DEGREE OF SWELLING (TIMES) | 20.9 | 17.6 | 15.6 | 85.2 | 15.4 | 15.5 |

[Table 2]

| PROPERTIES | | EVALUATION CONDITION | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|---|---|
| PRESSURE-SENSITIVE ADHESIVE PROPERTY N/ 25 mm AT TENSILE SPEED OF 0.3 m/min | ORDINARY STATE PRESSURE-SENSITIVE ADHESIVE FORCE | 23°C 50% RH, LAPSE OF 48 HOURS | 6.3 | 5.9 | 5.5 | 13.2 | 5.5 | 6.1 |
| | HEAT-RESISTANT PRESSURE-SENSITIVE ADVENSIVE FORCE | 80°C, LAPSE OF 500 HOURS | 10.1 | 8.9 | 8.4 | 19.8 | 8.4 | 8.9 |
| | MOISTURE-RESISTANT PRESSURE-SENSITIVE ADHESIVE FORCE | 50°C, 95% RH, LAPSE OF 500 HOURS | 5.9 | 5.4 | 5.1 | 13.7 | 5.1 | 6.3 |

| PROPERTIES | | EVALUATION CONDITION | EXAMPLE 1 | EXAMPLE 2 | EXAMPLE 3 | COMPARATIVE EXAMPLE 1 | COMPARATIVE EXAMPLE 2 | COMPARATIVE EXAMPLE 3 |
|---|---|---|---|---|---|---|---|---|
| PRESSURE-SENSITIVE ADHESIVE PROPERTY N/ 25 mm] AT TENSILE SPEED OF 30 m/min | ORDINARY STATE PRESSURE-SENSITIVE ADHESIVE FORCE | 23°C, 50% RH, LAPSE OF 48 HOURS | 12.3 | 10.7 | 10.4 | 31.5 | 10.4 | 11.8 |
| | HEAT-RESISTANT PRESSURE-SENSITIVE ADHESIVE FORCE | 80°C, LAPSE OF 500 HOURS | 26.5 | 23.4 | 22.0 | 42.3 | 22.0 | 23.5 |
| | MOISTURE-RESISTANT PRESSURE-SENSITIVE ADHESIVE FORCE | 50°C, 95% RH, LAPSE OF 500 HOURS | 16.5 | 15.2 | 13.7 | 30.7 | 13.7 | 14.5 |
| TROUSER TEAR STRENGHT [N] | ORDINARY STATE | 23°C, 50% RH, 0.3 m/min | 11.5 | 9.9 | 9.3 | 1.3 | 9.3 | 1.2 |
| PRESENCE/ABSENCE OF VENTILATION PORTION | | | PRESENCE | PRESENCE | PRESENCE | PRESENCE | ABSENCE | PRESENCE |
| ADVANTAGE OF THE INVENTION | | | | | | | | |
| PEELING PROPERTY TEST IN ACTUAL DRIVING | | | ○ | ○ | ○ | ○ | × | ○ |
| RELEASE WORKABILITY | | | ○ | ○ | ○ | × | ○ | × |

EP 2 626 396 A1

18

(Peeling Property Test in Actual Driving)

A protective film was attached outdoors to a wheel of an automobile with hands, which was then left uncontrolled for 3 hours. Subsequently, it was visually observed whether the protective film was peeled off after the automobile drove a distance of 10 km at a speed of 60 km/h. Herein, the wheel was an aluminum wheel. The case where the film had not been peeled off was evaluated as "°", while the case where the film had been peeled off was evaluated as "x".

(Release Workability Test)

After the protective film was manually attached to an automotive wheel tire and was stored under an environment of 50°C for 2 weeks, the protective film was manually released. At the time, it was confirmed whether the protective film was able to be smoothly released without a tear. The case where the film was able to be smoothly released was evaluated as "°", while the case where the release workability was deteriorated because the film teared was evaluated as "x".

From the results shown in Tables 1 and 2, an excellent effect has been confirmed, in which, because the protective film obtained in each Example met both the conditions that: a ventilation portion, through which air can pass from one surface to the other surface, is formed; and the pressure-sensitive adhesive force is within a specific range, the protective film was excellent in the releasability in actual driving. Further, an excellent effect has been confirmed, in which, because both the trouser tear strength and the pressure-sensitive adhesive force were within specific ranges, the protective film was able to be easily released even when released at a high speed.

On the other hand, in Comparative Example 1, it has been confirmed that, because the pressure-sensitive adhesive force, occurring when the film was released at a high speed, was larger than the specific range, the release needed a large force. In addition, it has been confirmed that, because the trouser tear strength was small, there was a problem that the base layer teared, thereby causing the release workability to be deteriorated. Further, in Comparative Example 2, peeling was caused in the actual driving, because a ventilation portion was not secured in the protective film. In Comparative Example 3, it has been confirmed that, because the trouser tear strength was small, there was a problem that the base layer teared, thereby causing the release workability to be deteriorated.

Even when the ventilation portion 18 as illustrated in Fig. 1 is formed in the protective film obtained in each Example, a tear originating at the ventilation portion can be suppressed, because the trouser tear strength in the vertical direction (MD) of the wheel protective film is 3 N or more. Further, because the ventilation portion 18 in the protective film 10 according to First Embodiment is an open hole, a pressure difference between the inside and outside of a wheel can be more surely reduced even in a state where the protective film 10 is attached to the wheel. Furthermore, because the ventilation portion 18 is formed into a circular shape, the stress, occurring when the protective film 10 is released, is likely to be uniform at the outer circumferential portion of the ventilation portion 18. Accordingly, a tear originating at the ventilation portion 18 can be further suppressed. Herein, the shape of the open hole is not limited to a circle, but may be a polygon, ellipse, or the like.

(Second Embodiment)

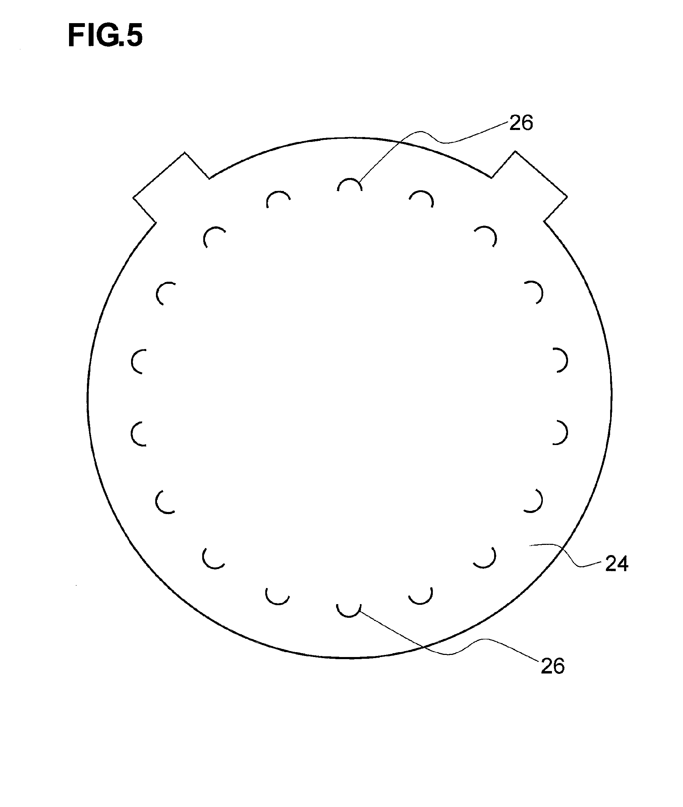

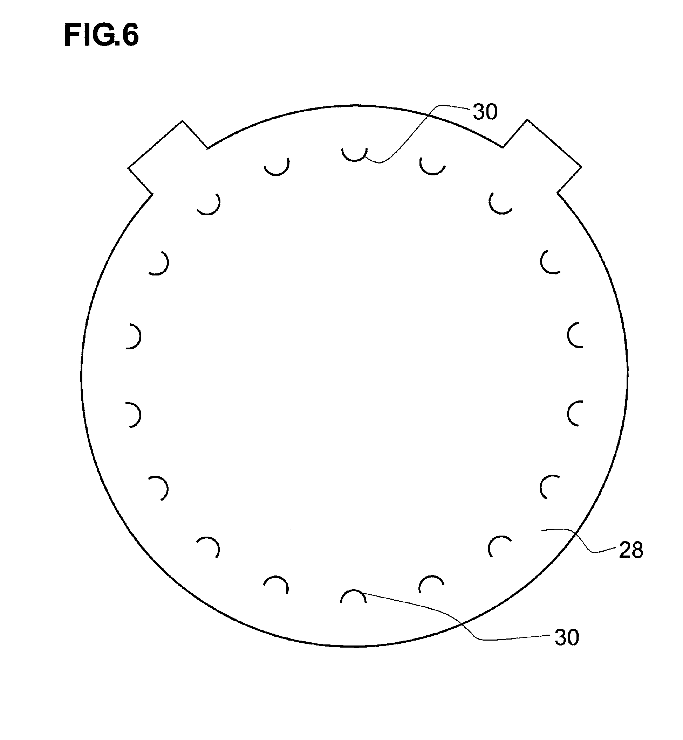

Fig. 5 is a front view of a protective film according to Second Embodiment. Fig. 6 is a front view of a protective film according to a variation of Second Embodiment.

In a protective film 24 according to the present embodiment, a plurality of ventilation portions 26 are annularly formed at equal intervals, similarly to the protective film 10 according to First Embodiment. The structure of the protective film 24 according to Second Embodiment is the same as that of the protective film 10 according to First Embodiment, except that the shapes of the ventilation portions in the respective films are different from each other. The ventilation portion 26 according to Second Embodiment is a slit formed into an arc shape. Accordingly, it is difficult for water or a contaminant to enter the inside of a wheel, to which the protective film 24 is attached, in a state where the wheel is at rest. On the other hand, in a state where the wheel is rotating, the arc-shaped slit is deformed due to a flow of air passing through the ventilation portion 26, etc., thereby allowing a larger amount of air to flow.

Although the slit of the ventilation portion 26 is formed such that the arc is oriented outward from the center of the protective film 24, the slit of a ventilation portion 30 may be formed such that the arc is oriented toward the center of a protective film 28.

[Third Embodiment]

In the aforementioned embodiments, the case where the pressure-sensitive adhesive layer is a solvent type; however, a pressure-sensitive adhesive layer of an emulsion type can also be used. Hereinafter, a method of manufacturing a pressure-sensitive adhesive layer of an emulsion type will be described.

(Preparation of Water Dispersion Type Acrylic Polymer)

After 58 parts by weight of butyl acrylate, 40 parts by weight of butyl methacrylate, 2.0 parts by weight of acrylic acid, 0.03 parts by weight of 2,2'-azobis(2-amidinopropane)dihydrochloride, as a polymerization initiator, 2.4 parts by weight of polyoxyethylene alkylphenyl ether phosphoric acid, as a release auxiliary agent, 0.8 parts by weight of polyoxyethylene nonylphenyl ether ammonium sulfate, as an emulsifier, and 150 parts by weight of water were placed into a reactor provided with a cooling pipe, nitrogen inlet pipe, thermometer, and stirrer, they were subjected to an emulsion polymerization. The mixture was adjusted to pH 8 by 10% by weight aqueous ammonia to obtain a polymer emulsion.

(Preparation of Pressure-Sensitive Adhesive Solution)

A water dispersion type pressure-sensitive adhesive A was obtained by mixing, into the aforementioned polymer emulsion, both 2.0 parts by weight of "EPOCROS WS-500" made by Nippon Shokubai Co., Ltd. (oxazoline group equivalent: 220 g*solid/eq.), as a water-soluble cross-linking agent containing an oxazoline group, and 2.0 parts by weight of "TINUVIN 765" made by Ciba Japan K.K., as a light stabilizer, based on 100 parts by weight of the solids (water dispersion type copolymer) in the polymer emulsion.

(Production of Wheel Protective Film)

A low-density polyethylene resin (PETROSEN180, density: 0.922 g/cm$^3$, made by TOSOH CORPORATION) was extruded, by an inflation method, from a dice heated to 160°C to form a polyethylene film having a thickness of 75 $\mu$m, and further a corona treatment was performed on one surface of the polyethylene film. The aforementioned water dispersion type pressure-sensitive adhesive A was coated on the surface subjected to the corona treatment, and a pressure-sensitive adhesive layer having a thickness of 10 $\mu$m was formed by heating the adhesive A at 80°C for 1 minute, thereby producing a wheel protective film. Thereafter, the film was cut into a circle having a diameter of 405 mm, and ventilation portions were secured by forming 18 circular holes each having a diameter of 5 mm at equal intervals, as illustrated in Fig. 3.

Even a protective film having such an emulsion type pressure-sensitive adhesive layer can exert effects similar to those of the protective film according to each of the aforementioned embodiments.

The present invention has been described above based on the embodiments and examples. The embodiments are described for exemplary purposes only, and it can be readily understood by those skilled in the art that various modifications may be made by making various combinations of the aforementioned components or processes, which are also encompassed in the scope of the present invention.

Reference Numerals

| | |
|---|---|
| 10 | PROTECTIVE FILM |
| 12 | BASE LAYER |
| 14 | PRESSURE-SENSITIVE ADHESIVE LAYER |
| 16 | SEPARATOR |
| 18 | VENTILATION PORTION |
| 20, 22 | GRIP PORTION |
| 24 | PROTECTIVE FILM |
| 26 | VENTILATION PORTION |
| 28 | PROTECTIVE FILM |
| 30 | VENTILATION PORTION |

Industrial Applicability

The present invention can be used in protective films to be attached to wheels of vehicles, such as automobiles.

**Claims**

1. A wheel protective film comprising:

a base layer; and

a pressure-sensitive adhesive layer provided on one surface of the base layer, wherein

in the wheel protective film, a ventilation portion through which air can pass from one surface to the other surface is formed, and wherein

a trouser tear strength in the vertical direction (MD) of the wheel protective film is 3 N or more, and wherein

a pressure-sensitive adhesive force of the wheel protective film (adherend: acrylic clear-coated panel, after a lapse of 48 hours under the condition of 23°C x 50% RH) is 4. 9 N/25 mm or more at a tensile speed of 0.3 m/min., and 19.6 N/25 mm or less at a tensile speed of 30 m/min.

2. The wheel protective film according to claim 1, wherein
the ventilation portion is a slit.

3. The wheel protective film according to claim 2, wherein
the slit is formed into an arc shape.

4. The wheel protective film according to claim 1, wherein
the ventilation portion is an open hole.

5. The wheel protective film according to any one of claims 1 to 4, wherein
a plurality of the ventilation portions are formed, and wherein
the plurality of the ventilation portions are annularly arranged at intervals.

6. The wheel protective film according to claim 5 having a circular shape, wherein
the plurality of the ventilation portions are arranged concentrically with respect to the center of the wheel protective film.

7. The wheel protective film according to claim 5 or claim 6, wherein
the plurality of the ventilation portions are arranged at equal intervals.

## FIG.1

A ◄━━┐ 18

20
(22)

20
(22)

10

18

A ◄━━┘

## FIG.2

18

18

12
14 } 10

16

# FIG.3

# FIG.4

# FIG.5

# FIG.6

**INTERNATIONAL SEARCH REPORT**

| International application No. |
|---|
| PCT/JP2011/005554 |

A. CLASSIFICATION OF SUBJECT MATTER
*C09J7/02*(2006.01)i, *B60B7/00*(2006.01)i

According to International Patent Classification (IPC) or to both national classification and IPC

B. FIELDS SEARCHED

Minimum documentation searched (classification system followed by classification symbols)
C09J7/02, B60B7/00

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-107556 A (Tsuchiya Co., Ltd.), 21 May 2009 (21.05.2009), claims; paragraphs [0013], [0030]; fig. 10 (Family: none) | 1-3,5-7 |
| Y | JP 2006-35914 A (Bando Chemical Industries, Ltd.), 09 February 2006 (09.02.2006), claims; paragraphs [0075] to [0076] (Family: none) | 1-7 |
| Y | JP 2005-155758 A (Toyota Motor Corp.), 16 June 2005 (16.06.2005), claims; paragraphs [0013], [0021] to [0025]; fig. 4 to 5 (Family: none) | 1-7 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 14 December, 2011 (14.12.11) | 27 December, 2011 (27.12.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| | International application No. |
|---|---|
| | PCT/JP2011/005554 |

C (Continuation).    DOCUMENTS CONSIDERED TO BE RELEVANT

| Category* | Citation of document, with indication, where appropriate, of the relevant passages | Relevant to claim No. |
|---|---|---|
| P,A | WO 2010/125967 A1  (Nitto Denko Corp.),<br>04 November 2010 (04.11.2010),<br>claims<br>& JP 2010-254916 A | 1-7 |

Form PCT/ISA/210 (continuation of second sheet) (July 2009)

**INTERNATIONAL SEARCH REPORT**

International application No.

PCT/JP2011/005554

Although claims 1-7 include every protective film for a wheel, which has such a desired characteristic that the trouser tear strength in the machine direction (MD) is not less than 3N, only protective films for a wheel having a specific structure set forth in the description are disclosed within the meaning of PCT Article 5. Consequently, claims 1-7 are not fully supported within the meaning of PCT Article 6.

In addition, since a person skilled in the art cannot understand what configurations or compositions are included in the surface protective films that have the above-mentioned desired characteristic and what configurations or compositions are not included in the surface protective films that have the above-mentioned desired characteristic, claims 1-7 fail to satisfy the requirement of clearness within the meaning of PCT Article 6.

This international search report therefore covers those supported and disclosed by the description, namely protective films for a wheel, which have a base layer that is formed only of a polyethylene resin.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005155758 A
- JP 2006035914 A
- JP 5090453 A
- JP 5090098 A

- JP 7114450 A
- JP 8111663 A
- JP 3879985 B
- JP 2008137547 A

**Non-patent literature cited in the description**

- **J. BRANDUP et al.** Polymer Handbook. John Wiley & Sons, Inc, 1999